# EUROPEAN PATENT APPLICATION

(11) **EP 4 624 846 A1**
(43) Date of publication of application: **01.10.2025**
(21) Application number: 24221816.2
(22) Date of filing: 19.12.2024
(51) Int. Cl.: F26B 21/00, F26B 3/04

(54) **ELECTRODE DRYING DEVICE**

(30) Priority: 29.03.2024 KR 20240043201
(71) Applicant: SAMSUNG SDI CO., LTD., Yongin-si, Gyeonggi-do 17084 (KR)
(72) Inventor: Lee, Sang Ho, 16678 Suwon-si, Gyeonggi-do (KR); Jang, Kyeong Ho, 16678 Suwon-si, Gyeonggi-do (KR); Lee, Han Sol, 16678 Suwon-si, Gyeonggi-do (KR); Kim, Byoung Kuk, 16678 Suwon-si, Gyeonggi-do (KR); Moon, Jeung Gi, 16678 Suwon-si, Gyeonggi-do (KR); Park, Jin Seo, 16678 Suwon-si, Gyeonggi-do (KR)
(74) Representative: Gulde & Partner

(57) **Abstract**

An electrode drying device includes a chamber through which an electrode plate is passable, and an upper adjustment unit in the chamber and configured to adjust hot air above the electrode plate to prevent non-uniform drying of the electrode plate due to a difference in flow rate.

## Description

### BACKGROUND

### 1. Field

Aspects of embodiments of the present disclosure relate to an electrode drying device.

### 2. Discussion of Related Art

Generally, as a demand for portable electronic products, such as notebooks, video cameras, mobile phones, and the like, sharply increase and robots and electric vehicles are commercialized in earnest, research on high-performance secondary batteries which can be repeatedly charged and discharged is actively underway. Particularly, a lithium secondary battery has been widely used as an energy source of various electronic products due to a high energy density and operating voltage thereof and excellent storage and lifespan characteristics.

In the lithium secondary battery, an electrode plate is composed of a positive electrode and a negative electrode. The positive electrode and the negative electrode may go through a process of applying a slurry prepared by mixing an active material in a solvent to a thin film of aluminum and copper materials and drying the slurry. An electrode drying device should maintain uniformity in a width direction of the electrode plate in a process of drying the electrode plate to acquire uniform electrode quality. When uniformity in the width direction of the dried electrode plate is not maintained, drying quality becomes non-uniform, which can affect product characteristics.

The above-described information disclosed in the technology that forms the background of the present disclosure is provided to improve understanding of the background of the present disclosure, and thus may include information that does not constitute the related art.

### SUMMARY

According to an aspect of embodiments of the present disclosure, an electrode drying device capable of suppressing manufacturing defects in an electrode plate by maintaining uniform drying in a width direction of the electrode plate is provided. According to another aspect of embodiments of the present disclosure, an electrode drying device capable of resolving a flow rate deviation in a chamber to realize uniform drying of an electrode plate is provided.

The above and other aspects and features of the present disclosure will be described in or will be apparent from the following description of some embodiments of the present disclosure.

According to one or more embodiments, an electrode drying device includes: a chamber through which an electrode plate is passable; and an upper adjustment unit in the chamber, and configured to adjust hot air above the electrode plate to prevent non-uniform drying of the electrode plate due to a difference in flow rate.

The upper adjustment unit may include a plurality of upper exhaust portions configured to discharge a drying gas from the chamber, and an upper air supply portion between the upper exhaust portions and configured to supply the drying gas.

The upper exhaust portion may include an upper exhaust discharge pipe passing through the chamber to discharge the drying gas to an outside of the chamber, an upper exhaust duct connected to the upper exhaust discharge pipe and configured to face the electrode plate, and an upper exhaust nozzle connected to the upper exhaust duct and into which the drying gas is introduced.

The upper exhaust nozzle may include a plurality of upper exhaust nozzles spaced apart from each other in a longitudinal direction of the upper exhaust duct.

The upper exhaust nozzle may include an exhaust nozzle pipe connected to the upper exhaust duct and arranged above the electrode plate, and an exhaust distribution portion in the exhaust nozzle pipe and configured to induce uniform exhaust.

The exhaust distribution portion may include an exhaust distribution plate mounted in the exhaust nozzle pipe, and an exhaust distribution hole extending through the exhaust distribution plate and through which the drying gas passes.

The upper exhaust portion may further include an upper exhaust connection pipe configured to connect a plurality of upper exhaust discharge pipes, an upper exhaust extending pipe extending from the upper exhaust connection pipe and configured to discharge the drying gas, and an upper exhaust fan in (e.g., built in) the upper exhaust extending pipe and configured to discharge (e.g., forcibly discharge) the drying gas.

The upper air supply portion may include an upper air supply pipe passing through the chamber to supply the drying gas into the chamber, an upper air supply duct connected to the upper air supply pipe and configured to face the electrode plate, and an upper air supply nozzle connected to the upper air supply duct and through which the drying gas is supplied into the chamber.

The upper air supply nozzle may include a plurality of upper air supply nozzles spaced apart from each other in a longitudinal direction of the upper air supply duct.

The upper air supply nozzle may include an air supply nozzle pipe connected to the upper air supply duct and arranged above the electrode plate, and an air supply distribution portion in the air supply nozzle pipe and configured to induce uniform air supply.

The air supply distribution portion may include an air supply distribution plate in the air supply nozzle pipe, and an air supply distribution hole extending through the air supply distribution plate and through which the drying gas passes.

The upper adjustment unit may further include upper insulating portions between the upper exhaust portions and the upper air supply portion and configured to maintain a temperature of the upper air supply portion.

The electrode drying device may further include a lower adjustment unit in the chamber and configured to adjust hot air under the electrode plate.

The lower adjustment unit may include a lower air supply pipe passing through the chamber to supply the drying gas into the chamber, a lower air supply duct connected to the lower air supply pipe and configured to face the electrode plate, a lower air supply nozzle connected to the lower air supply duct and through which the drying gas is supplied into the chamber, and a lower exhaust pipe connected to the chamber to discharge the drying gas to an outside.

According to one or more embodiments, an electrode drying device includes: a chamber through which an electrode plate is passable; a pair of upper exhaust portions configured to discharge a drying gas from the chamber; and an upper air supply portion between the upper exhaust portions and configured to supply the drying gas, wherein the drying gas discharged from the upper air supply portion is exhausted by the upper exhaust portions to prevent a flow rate deviation from occurring in the chamber.

The upper exhaust portions may include a pair of upper exhaust discharge pipes passing through the chamber to discharge the drying gas to an outside of the chamber, a pair of upper exhaust ducts respectively connected to the pair of upper exhaust discharge pipes and configured to face the electrode plate, and upper exhaust nozzles connected to the pair of upper exhaust ducts and into which the drying gas is introduced.

The upper exhaust nozzles may include first exhaust nozzles arranged across the pair of upper exhaust ducts and connected to each of the pair of upper exhaust ducts, and a second exhaust nozzle between the first exhaust nozzles and including opposite end portions connected to the first exhaust nozzles.

The upper air supply portion may include an upper air supply pipe between the upper exhaust discharge pipes, and passing through the chamber to supply the drying gas into the chamber, an upper air supply duct between the upper exhaust ducts, connected to the upper air supply pipe, and configured to face the electrode plate, and upper air supply nozzles between the upper exhaust nozzles, connected to the upper air supply duct, and through which the drying gas is supplied into the chamber.

The upper air supply nozzles may include a first air supply nozzle arranged across the upper air supply duct and connected to the upper air supply duct, and second air supply nozzles extending from opposite end portions of the first air supply nozzle and located between the upper exhaust nozzles.

Angles of the upper exhaust nozzles and the upper air supply nozzles may be adjustable.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure is not to be construed as being limited to the drawings.
FIG. 1 is a view schematically illustrating an electrode drying device according to an embodiment of the present disclosure;
FIG. 2 is a view schematically illustrating an upper adjustment unit of the electrode drying device of FIG. 1;
FIG. 3 is a view schematically illustrating upper exhaust portions of the electrode drying device of FIG. 1;
FIG. 4 is a side cross-sectional view schematically illustrating upper exhaust nozzles of the electrode drying device of FIG. 1;
FIG. 5 is a plan cross-sectional view schematically illustrating the upper exhaust nozzles of FIG. 4;
FIG. 6 is a view schematically illustrating a state in which a plurality of upper exhaust portions of the electrode drying device of FIG. 1 converge and discharge drying gas;
FIG. 7 is a view schematically illustrating an upper air supply portion of the electrode drying device of FIG. 1;
FIG. 8 is a side cross-sectional view schematically illustrating an upper air supply nozzle of the electrode drying device of FIG. 1;
FIG. 9 is a plan cross-sectional view schematically illustrating the upper air supply nozzle of FIG. 8;
FIG. 10 is a view schematically illustrating upper insulating portions of the electrode drying device of FIG. 1;
FIG. 11 is a view schematically illustrating a lower adjustment unit of the electrode drying device of FIG. 1;
FIG. 12 is a side view schematically illustrating an electrode drying device according to another embodiment of the present disclosure;
FIG. 13 is a perspective view schematically illustrating the electrode drying device of FIG. 12;
FIG. 14 is a bottom view schematically illustrating upper exhaust portions of the electrode drying device of FIG. 12;
FIG. 15 is a bottom view schematically illustrating an upper air supply portion of the electrode drying device of FIG. 12;
FIG. 16 is a bottom view schematically illustrating a disposition state of the upper exhaust portions and the air supply portion of the electrode drying device of FIG. 12; and
FIG. 17 is a view schematically illustrating a temperature flow according to an embodiment of the present disclosure.

### DETAILED DESCRIPTION

Herein, some embodiments of the present disclosure will be described, in further detail, with reference to the accompanying drawings. The terms or words used in this specification and claims are not to be construed as being limited to the usual or dictionary meaning and are to be interpreted as having a meaning and concept consistent with the technical scope of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical aspects and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element, or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part, or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

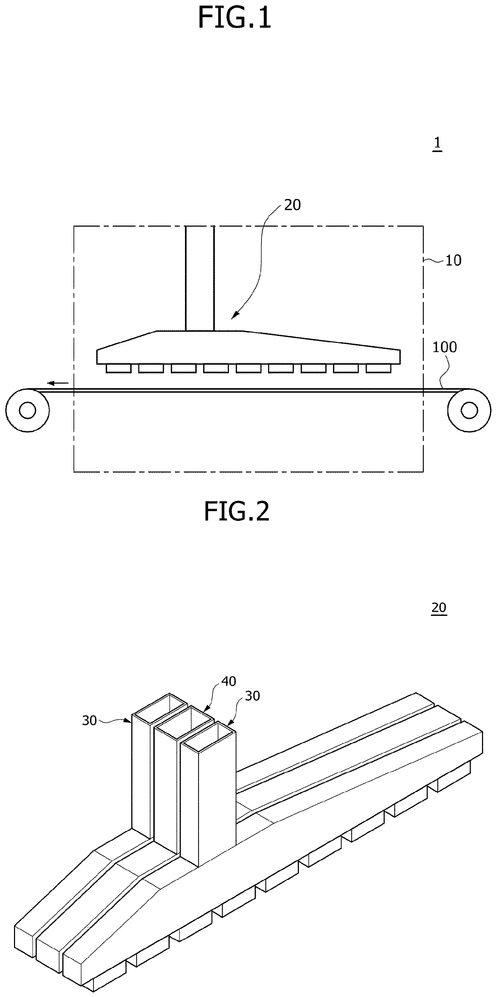

FIG. 1 is a view schematically illustrating an electrode drying device according to an embodiment of the present disclosure. Referring to FIG. 1, an electrode drying device 1 according to an embodiment of the present disclosure includes a chamber 10 and an upper adjustment unit 20.

An electrode plate 100 on which an active material has been applied may pass through the chamber 10. The chamber 10 may be open and closed in a vertical direction and vacuumized as desired. The chamber 10 may be a vacuum chamber and may include means to reduce the pressure in the chamber, e.g. a vacuum pump. The chamber 10 may have a length in left and right directions corresponding to a traveling direction of the electrode plate 100. An inlet and an outlet may be formed in both left and right side surfaces of the chamber 10 such that the electrode plate 100 may pass therethrough.

The upper adjustment unit 20 may be provided in the chamber 10, and may adjust hot air above the electrode plate 100 to prevent or substantially prevent non-uniform drying of the electrode plate 100 due to a difference in flow rate. The upper adjustment unit 20 may be mounted at an upper portion of the chamber 10. The upper adjustment unit 20 may have a length in the traveling direction of the electrode plate 100. The upper adjustment unit 20 may be disposed to face the electrode plate 100. The upper adjustment unit 20 may adjust the hot air such that high-temperature gas for drying may have a uniform (uniform or substantially uniform) flow rate in the chamber 10. Therefore, a flow rate deviation between both left and right end portions and a central portion of the electrode plate 100 in the chamber 10 is resolved by the upper adjustment unit 20, and the electrode plate 100 may be uniformly dried.

FIG. 2 is a view schematically illustrating the upper adjustment unit of the electrode drying device of FIG. 1. Referring to FIG. 2, the upper adjustment unit 20 according to an embodiment of the present disclosure may include a plurality of upper exhaust portions 30 and an upper air supply portion 40.

The plurality of upper exhaust portions 30 may discharge drying gas from the chamber 10. The upper exhaust portions 30 may be mounted at the upper portion of the chamber 10 and may discharge the drying gas which is present above the electrode plate 100 to the outside.

In an embodiment, the upper air supply portion 40 may be disposed between the upper exhaust portions 30 and may supply the drying gas. The upper air supply portion 40 may be mounted at the upper portion of the chamber 10 and may discharge the drying gas above the electrode plate 100.

In an embodiment, the upper exhaust portions 30 and the upper air supply portion 40 may be alternately disposed in a direction orthogonal to a traveling direction of the electrode plate 100. In an embodiment, the upper exhaust portions 30 and the upper air supply portion may be alternately disposed along the traveling direction of the electrode plate 100. In an embodiment, the upper exhaust portions 30 may be disposed at both, or opposite, end portions of the upper adjustment unit 20, and the upper air supply portion 40 may be disposed between the upper exhaust portions 30.

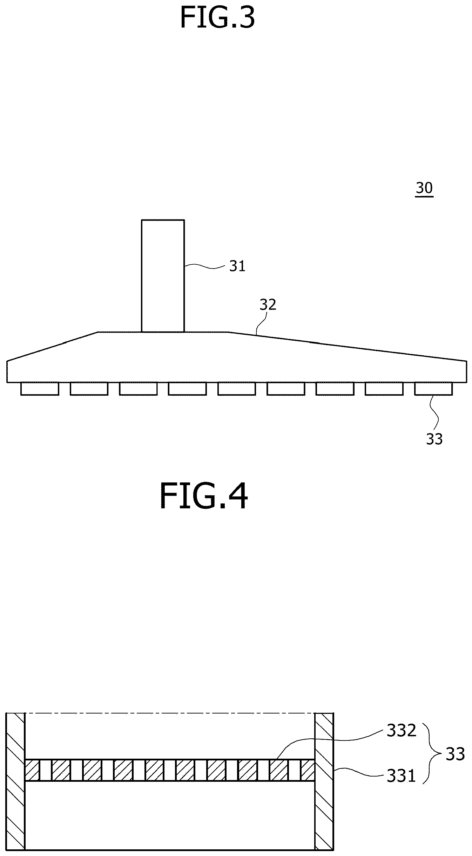

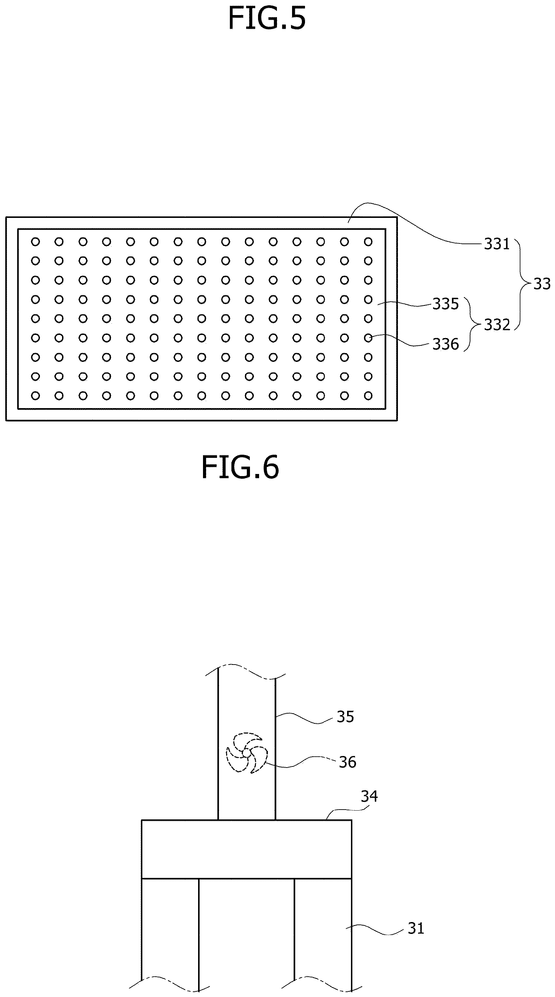

FIG. 3 is a view schematically illustrating the upper exhaust portions of the electrode drying device of FIG. 1; FIG. 4 is a side cross-sectional view schematically illustrating upper exhaust nozzles of the electrode drying device of FIG. 1; and FIG. 5 is a plan cross-sectional view schematically illustrating the upper exhaust nozzles of FIG. 4. Referring to FIGS. 3 to 5, the upper exhaust portion 30 according to an embodiment of the present disclosure may include an upper exhaust discharge pipe 31, an upper exhaust duct 32, and upper exhaust nozzles 33.

The upper exhaust discharge pipe 31 may pass through the chamber 10 to discharge the drying gas to the outside of the chamber 10. The upper exhaust discharge pipe 31 may be mounted at the upper portion of the chamber 10.

The upper exhaust duct 32 may be connected to the upper exhaust discharge pipe 31, and may have a length sufficient to face the electrode plate 100. The upper exhaust duct 32 may be connected to a lower portion of the upper exhaust discharge pipe 31. In an embodiment, the upper exhaust duct 32 may be disposed to face the electrode plate 100 with an upper side thereof formed as an inclined surface and a lower side thereof formed as a flat surface.

The upper exhaust nozzles 33 may be connected to the upper exhaust duct 32, and the drying gas may be introduced into the upper exhaust nozzles 33. The drying gas introduced into the upper exhaust nozzles 33 may be discharged to the outside through the upper exhaust duct 32 and the upper exhaust discharge pipe 31.

The plurality of upper exhaust nozzles 33 may be disposed to be spaced apart from each other in a longitudinal direction of the upper exhaust duct 32. The upper exhaust nozzles 33 may be connected to the upper exhaust duct 32, and extend downward to be inlets for suctioning the drying gas in the chamber 10.

The upper exhaust nozzle 33 may include an exhaust nozzle pipe 331 and an exhaust distribution portion 332. The exhaust nozzle pipe 331 may be connected to the upper exhaust duct 32 and may be disposed above the electrode plate 100. The exhaust nozzle pipe 331 may guide the drying gas which is present in the chamber 10 to the upper exhaust duct 32. The exhaust distribution portion 332 may be formed in the exhaust nozzle pipe 331 and may induce uniform exhaust. In an embodiment, the exhaust nozzle pipe 331 may have a rectangular strip-shaped cross section, and the drying gas may be uniformly introduced into a rectangular interior of the exhaust nozzle pipe 331 by the exhaust distribution portion 332.

The exhaust distribution portion 332 may include an exhaust distribution plate 335 and exhaust distribution holes 336. The exhaust distribution plate 335 may be mounted in the exhaust nozzle pipe 331. The exhaust distribution holes 336 may pass through (e.g., be perforated in) the exhaust distribution plate 335 to allow the drying gas to pass through the exhaust distribution holes 336. However, sizes and locations of the exhaust distribution holes 336 may be formed differently for each exhaust distribution plate 335. The exhaust distribution plate 335 including the exhaust distribution holes 336 having shapes suitable for a working environment may be mounted in the exhaust nozzle pipe 331. In an embodiment, the exhaust nozzle pipe 331 may be formed with a door for mounting or replacing the exhaust distribution portion 332.

FIG. 6 is a view schematically illustrating a state in which the plurality of upper exhaust portions of the electrode drying device of FIG. 1 converge and discharge the drying gas. Referring to FIG. 6, the upper exhaust portion 30 may include an upper exhaust connection pipe 34, an upper exhaust extending pipe 35, and an upper exhaust fan 36.

The upper exhaust connection pipe 34 may connect a plurality of upper exhaust discharge pipes 31. The upper exhaust connection pipe 34 may connect each upper exhaust discharge pipe 31 and may be mounted at the upper portion of the chamber 10.

The upper exhaust extending pipe 35 may extend from the upper exhaust connection pipe 34 and discharge the drying gas to the outside of the chamber 10. The upper exhaust fan 36 may be arranged in (e.g., built in) the upper exhaust extending pipe 35 to forcibly discharge the drying gas.

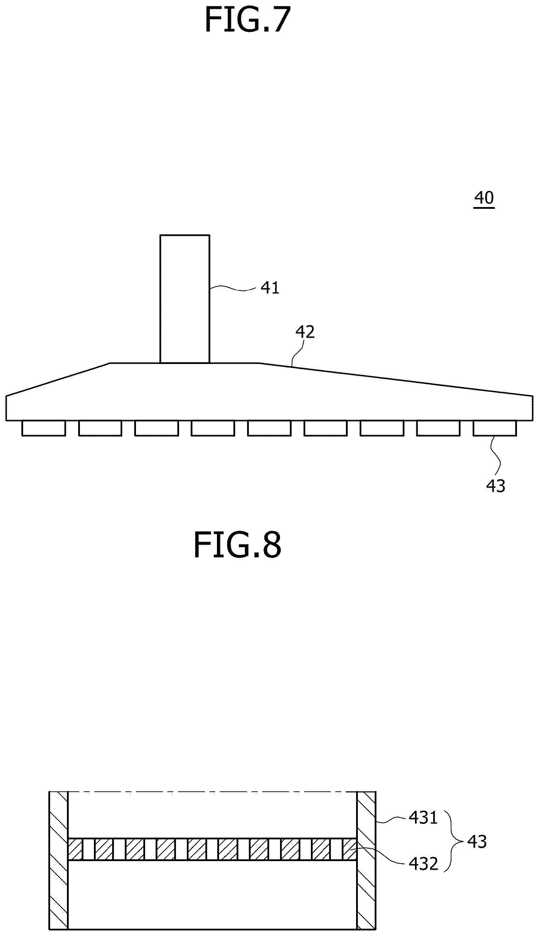

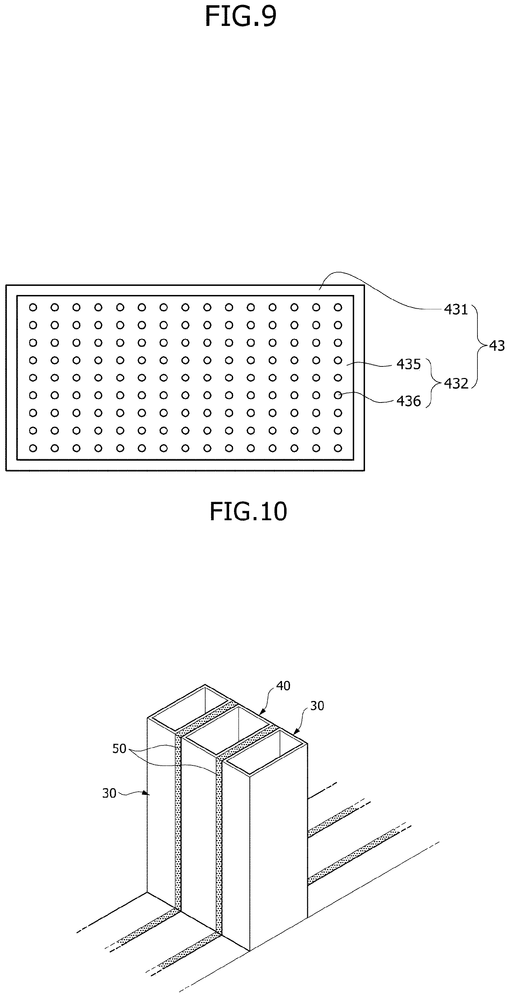

FIG. 7 is a view schematically illustrating the upper air supply portion of the electrode drying device of FIG. 1; FIG. 8 is a side cross-sectional view schematically illustrating an upper air supply nozzle of the electrode drying device of FIG. 1; and FIG. 9 is a plan cross-sectional view schematically illustrating the upper air supply nozzle of FIG. 8. Referring to FIGS. 7 to 9, the upper air supply portion 40 according to an embodiment of the present disclosure may include an upper air supply pipe 41, an upper air supply duct 42, and a plurality of upper air supply nozzles 43.

The upper air supply pipe 41 may pass through the chamber 10 to supply the drying gas into the chamber 10. The upper air supply pipe 41 may be mounted at the upper portion of the chamber 10.

The upper air supply duct 42 may be connected to the upper air supply pipe 41, and may have a length sufficient to face the electrode plate 100. The upper air supply duct 42 may be connected to a lower portion of the upper air supply pipe 41. In an embodiment, the upper air supply duct 42 may be disposed to face the electrode plate 100 with an upper side thereof formed as an inclined surface and a lower side thereof formed as a flat surface.

The upper air supply nozzles 43 may be connected to the upper air supply duct 42, and the drying gas may be discharged through the upper air supply nozzles 43. The drying gas discharged through the upper air supply nozzles 43 may dry the electrode plate 100.

In an embodiment, the upper air supply nozzles 43 may be disposed to be spaced apart from each other in a longitudinal direction of the upper air supply duct 42. The upper air supply nozzles 43 may be connected to the upper air supply duct 42, and extend downward to be outlets for discharging the drying gas into the chamber 10.

The upper air supply nozzle 43 may include an air supply nozzle pipe 431 and an air supply distribution portion 432. The air supply nozzle pipe 431 may be connected to the upper air supply duct 42 and may be disposed above the electrode plate 100. The air supply nozzle pipe 431 may guide the drying gas which is present in the chamber 10 to the upper air supply duct 42. The air supply distribution portion 432 may be formed in the air supply nozzle pipe 431, and may induce uniform air supply. In an embodiment, the air supply nozzle pipe 431 may have a rectangular strip-shaped cross section, and the drying gas may be uniformly introduced into a rectangular interior of the air supply nozzle pipe 431 by the air supply distribution portion 432.

The air supply distribution portion 432 may include an air supply distribution plate 435 and air supply distribution holes 436. The air supply distribution plate 435 may be mounted in the air supply nozzle pipe 431. The air supply distribution holes 436 may extend through (e.g., be perforated in) the air supply distribution plate 435 to allow the drying gas to pass through the air supply distribution holes 436. However, sizes and locations of the air supply distribution holes 436 may be formed differently for each air supply distribution plate 435. The air supply distribution plate 435 including the air supply distribution holes 436 having shapes suitable for a working environment may be mounted in the air supply nozzle pipe 431. In an embodiment, the air supply nozzle pipe 431 may be formed with a door for mounting or replacing the air supply distribution portion 432.

FIG. 10 is a view schematically illustrating upper insulating portions of the electrode drying device of FIG. 1. Referring to FIG. 10, the upper adjustment unit 20 according to an embodiment of the present disclosure may further include upper insulating portions 50.

The upper insulating portions 50 may be disposed between the upper exhaust portions 30 and the upper air supply portion 40 and may maintain a temperature of the upper air supply portion 40. The upper insulating portions 50 may be attached to the upper air supply portion 40 and may prevent or substantially prevent the temperature of the upper air supply portion 40 from decreasing due to the upper exhaust portion 30. The upper insulating portions 50 may cover all or only a portion of an outer side surface of the upper air supply portion 40.

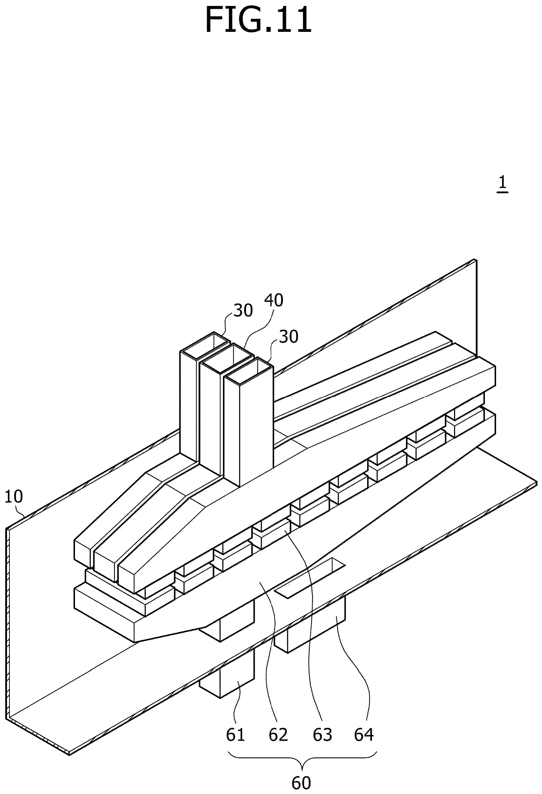

FIG. 11 is a view schematically illustrating a lower adjustment unit of the electrode drying device of FIG. 1. Referring to FIG. 11, the electrode drying device 1 according to an embodiment of the present disclosure may further include a lower adjustment unit 60.

The lower adjustment unit 60 may be provided in the chamber 10, and may adjust hot air under the electrode plate 100 to prevent or substantially prevent non-uniform drying of the electrode plate 100 due to a difference in flow rate. The lower adjustment unit 60 may be mounted at a lower portion of the chamber 10.

In an embodiment, the lower adjustment unit 60 may include a lower air supply pipe 61, a lower air supply duct 62, lower air supply nozzles 63, and a lower exhaust pipe 64.

The lower air supply pipe 61 may pass through the chamber 10 to supply the drying gas into the chamber 10. The lower air supply pipe 61 may be mounted at the lower portion of the chamber 10.

The lower air supply duct 62 may be connected to the lower air supply pipe 61, and may have a length sufficient to face the electrode plate 100. The lower air supply duct 62 may be connected to a lower portion of the lower air supply pipe 61. In an embodiment, the lower air supply duct 62 may be disposed to face the electrode plate 100 with a lower side thereof formed as an inclined surface and an upper side thereof formed as a flat surface.

The lower air supply nozzles 63 may be connected to the lower air supply duct 62, and the drying gas may be discharged through the lower air supply nozzles 63. The drying gas discharged through the lower air supply nozzles 63 may dry the electrode plate 100.

The plurality of lower air supply nozzles 63 may be disposed to be spaced apart from each other in a longitudinal direction of the lower air supply duct 62. The lower air supply nozzles 63 may be connected to the lower air supply duct 62, and extend downward to be outlets for discharging the drying gas into the chamber 10.

The lower exhaust pipe 64 may be connected to the chamber 10 and may discharge the drying gas to the outside. The lower exhaust pipe 64 may be connected to the lower portion of the chamber 10. The lower exhaust pipe 64 may discharge the drying gas moving downward in the lower air supply duct 62 to the outside.

In an embodiment, the lower adjustment unit 60 may have a shape symmetrical to the upper adjustment unit 20 based on the electrode plate 100. Accordingly, since a configuration of the upper adjustment unit 20 shown in FIGS. 3 to 9 may correspond to the lower adjustment unit 60 symmetrical to the upper adjustment unit 20 based on the electrode plate 100 and disposed at the lower portion of the chamber 10, a description of the upper adjustment unit 20 may be applied to the lower adjustment unit 60.

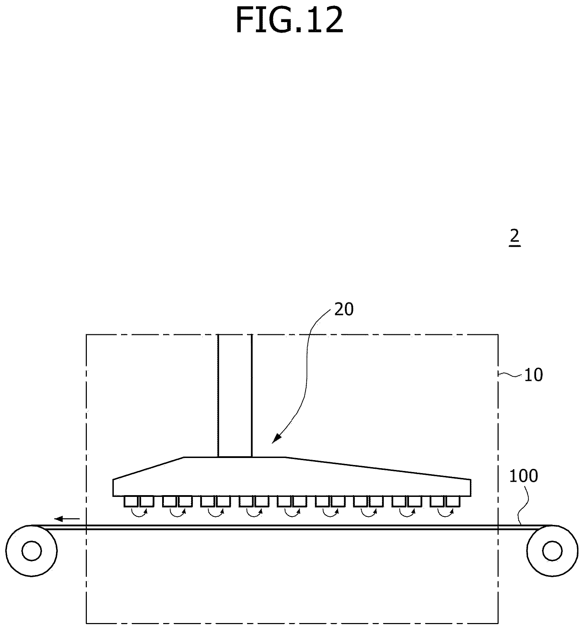

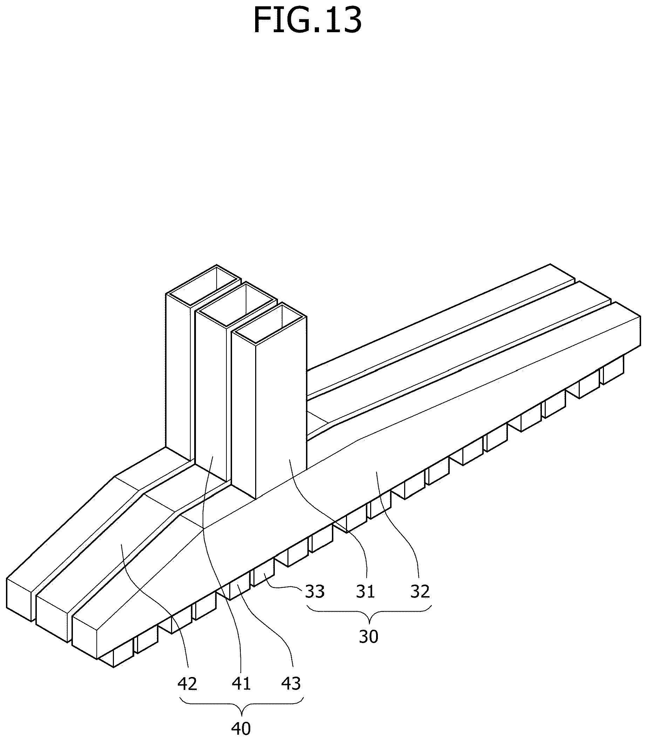

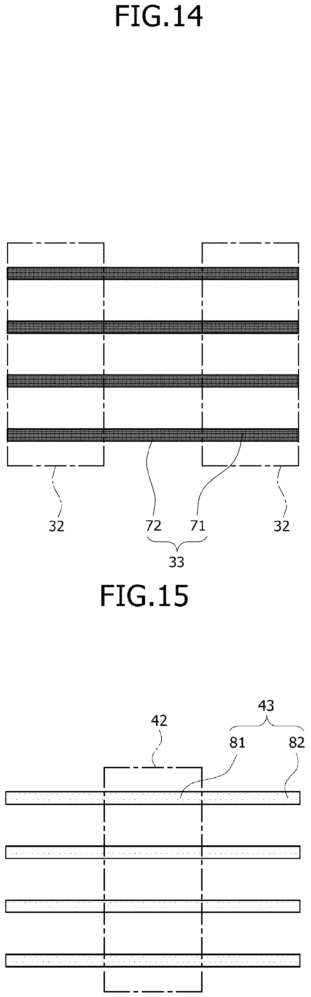

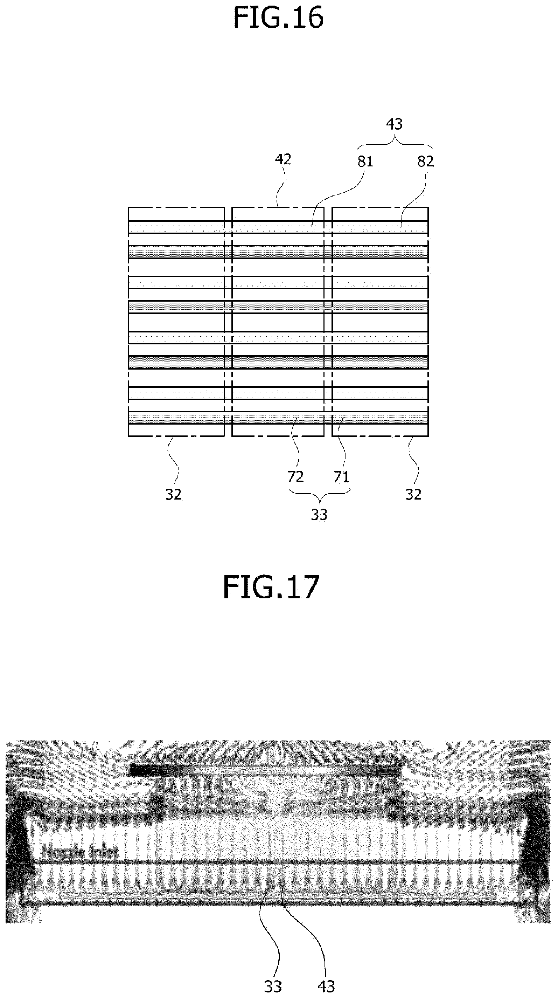

FIG. 12 is a side view schematically illustrating an electrode drying device according to another embodiment of the present disclosure; and FIG. 13 is a perspective view schematically illustrating the electrode drying device of FIG. 12. FIG. 14 is a bottom view schematically illustrating upper exhaust portions of the electrode drying device of FIG. 12; FIG. 15 is a bottom view schematically illustrating an upper air supply portion of the electrode drying device of FIG. 12; and FIG. 16 is a bottom view schematically illustrating a disposition state of the upper exhaust portions and the air supply portion of the electrode drying device of FIG. 12. Referring to FIGS. 12 to 16, an electrode drying device 2 according to an embodiment of the present disclosure may include a chamber 10, upper exhaust portions 30, and an upper air supply portion 40. Drying gas discharged from the upper air supply portion 40 may be exhausted by neighboring upper exhaust portions 30 to prevent or substantially prevent a flow rate deviation from occurring in the chamber 10. When the flow rate deviation of the drying gas in the chamber 10 is resolved, an electrode plate 100 may be uniformly dried by the drying gas.

The chamber 10, the upper exhaust portions 30, and the upper air supply portion 40 according to the present embodiment of the present disclosure correspond to the chamber 10, the upper exhaust portions 30, and the upper air supply portion 40 according to the previously described embodiment of the present disclosure, and further detailed description thereof may be omitted. However, a disposition structure of the upper exhaust portions 30 and the upper air supply portion 40 which are different from the electrode drying device 1 according to the previously described embodiment of the present disclosure will be described below.

In an embodiment, a pair of upper exhaust portions 30 may have symmetrical shapes and may be disposed to face each other. The upper exhaust portion 30 may include an upper exhaust discharge pipe 31, an upper exhaust duct 32, and upper exhaust nozzles 33. The upper exhaust discharge pipe 31 may pass through the chamber 10 to discharge the drying gas to the outside of the chamber 10. The upper exhaust duct 32 may be connected to the upper exhaust discharge pipe 31, and may have a length sufficient to face the electrode plate 100. The upper exhaust nozzles 33 may be connected to the upper exhaust duct 32, and the drying gas may be introduced into the upper exhaust nozzles 33.

The upper air supply portion 40 may include an upper air supply pipe 41, an upper air supply duct 42, and upper air supply nozzles 43. The upper air supply pipe 41 may pass through the chamber 10 to supply the drying gas into the chamber 10. The upper air supply duct 42 may be connected to the upper air supply pipe 41, and may have a length sufficient to face the electrode plate 100. The upper air supply nozzles 43 may be connected to the upper air supply duct 42, and the drying gas may be discharged.

The upper air supply pipe 41 may be disposed between facing upper exhaust discharge pipes 31. The upper air supply duct 42 may be disposed between facing upper exhaust ducts 32.

The upper exhaust nozzle 33 may include a first exhaust nozzle 71 and a second exhaust nozzle 72. The first exhaust nozzle 71 and the second exhaust nozzle 72 are a depiction of a disposition state of the upper exhaust nozzle 33, and a structure of the upper exhaust nozzle 33 may be provided with an exhaust nozzle pipe 331 and an exhaust distribution portion 332 (see FIGS. 4 and 5). The exhaust nozzle pipe 331 is branched at an upper portion and connected to the pair of upper exhaust ducts 32, and the drying gas may be uniformly distributed and moved by the exhaust distribution portion 332. In an embodiment, the first exhaust nozzle 71 and the second exhaust nozzle 72 may be equally applied to the upper exhaust portion 30 according to the previously described embodiment of the present disclosure.

The first exhaust nozzles 71 may be disposed across the pair of upper exhaust ducts 32 and may be connected to each of the upper exhaust ducts 32. The first exhaust nozzle 71 may have a length in a direction intersecting the traveling direction of the electrode plate 100. The second exhaust nozzle 72 may be disposed between the first exhaust nozzles 71 and have both, or opposite, ends connected to the first exhaust nozzles 71. The upper air supply duct 42 may be disposed above the first exhaust nozzles 71. The drying gas introduced into the second exhaust nozzle 72 may move to the upper exhaust ducts 32 through the first exhaust nozzles 71.

In an embodiment, the upper air supply nozzle 43 may include a first air supply nozzle 81 and a second air supply nozzle 82. The first air supply nozzle 81 and the second air supply nozzle 82 are a depiction of a disposition state of the upper air supply nozzle 43, and a structure of the upper air supply nozzle 43 may include the air supply nozzle pipe 431 and the air supply distribution portion 432 (see FIGS. 8 and 9). A lower portion of the air supply nozzle pipe 431 may be expanded, and the drying gas may be uniformly distributed and moved by the air supply distribution portion 432. The first air supply nozzle 81 and the second air supply nozzle 82 may be equally applied to the upper air supply portion 40 according to the previously described embodiment of the present disclosure.

The first air supply nozzles 81 may be disposed across the upper air supply duct 42 and may be connected to the upper air supply duct 42. The first air supply nozzles 81 may have a length in the direction intersecting the traveling direction of the electrode plate 100. The second air supply nozzle 82 may extend from both, or opposite, end portions of the first air supply nozzle 81 and may be disposed between the upper exhaust nozzles 33. In an embodiment, when viewed from the bottom, the upper exhaust nozzles 33 and the upper air supply nozzle 43 may be alternately disposed. The upper exhaust duct 32 may be disposed above the second air supply nozzle 82. The drying gas supplied to the chamber 10 through the upper air supply nozzles 43 may be discharged to the outside through the neighboring upper exhaust nozzle 33.

However, angles of the upper exhaust nozzles 33 and upper air supply nozzles 43 may be adjusted. In an embodiment, the upper exhaust nozzles 33 and the upper air supply nozzles 43 may have corrugated shapes such that the inlet and outlet angles of the drying gas may be adjusted or varied. In an embodiment, the upper exhaust nozzles 33 and the upper air supply nozzles 43 may be manufactured with various inlet and outlet angles, replaced with products having appropriate angles as desired, and respectively assembled to the upper exhaust duct 32 and the upper air supply duct 42. The occurrence of a slight flow rate deviation while the electrode plate 100 is dried may be resolved by varying, or correcting, the angles of the upper exhaust nozzles 33 and upper air supply nozzles 43.

FIG. 17 is a view schematically illustrating a temperature flow according to an embodiment of the present disclosure. Referring to FIG. 17, in one or more embodiments, the upper exhaust nozzles 33 and the upper air supply nozzles 43 are alternately disposed, the drying gas exhibits a uniform flow rate throughout the chamber 10, and a temperature deviation may be resolved. Accordingly, uniform drying of the electrode plate 100 may be realized.

An electrode drying device according to one or more embodiments of the present disclosure can uniformly (uniformly or substantially uniformly) dry an electrode plate while upper exhaust portions discharge drying gas in a chamber to the outside and an upper air supply portion supplies the drying gas into the chamber.

The electrode drying device according to one or more embodiments of the present disclosure can resolve a flow rate deviation of the drying gas in the chamber by alternately disposing the upper exhaust portions and the upper air supply portion.

According to another aspect of one or more embodiments of the present disclosure, a battery and a battery pack manufactured using an electrode drying device having an improved structure, and a vehicle including the same, are provided.

However, aspects and effects obtainable through the present disclosure are not limited to the above aspects and effects, and other technical aspects and effects that are not mentioned will be clearly understood by those skilled in the art from the following description of the present disclosure.

While the present disclosure has been described with reference to some embodiments shown in the drawings, these embodiments are merely illustrative and it is to be understood that various modifications and equivalent other embodiments can be derived by those skilled in the art on the basis of the embodiments.

## Claims

1. An electrode drying device (1) comprising:
a chamber (10) through which an electrode plate (100) is passable; and
an upper adjustment unit (20) in the chamber (10), and configured to adjust hot air above the electrode plate (100) to prevent non-uniform drying of the electrode plate due to a difference in flow rate.

2. The electrode drying device (1) as claimed in claim 1, wherein the upper adjustment unit (20) comprises:
a plurality of upper exhaust portions (30) configured to discharge a drying gas from the chamber; and
an upper air supply portion (40) between the upper exhaust portions (30) and configured to supply the drying gas.

3. The electrode drying device (1) as claimed in claim 2, wherein the upper exhaust portion (30) comprises:
an upper exhaust discharge pipe (31) passing through the chamber (10) to discharge the drying gas to an outside of the chamber;
an upper exhaust duct (32) connected to the upper exhaust discharge pipe (31) and configured to face the electrode plate (100); and
an upper exhaust nozzle (33) connected to the upper exhaust duct (32) and into which the drying gas is introduced.

4. The electrode drying device (1) as claimed in claim 3, wherein the upper exhaust nozzle (33) comprises:
an exhaust nozzle pipe (331) connected to the upper exhaust duct (32) and arranged above the electrode plate (100); and
an exhaust distribution portion (332) in the exhaust nozzle pipe (331) and configured to induce uniform exhaust.

5. The electrode drying device as claimed in claim 4, wherein the exhaust distribution portion (332) comprises:
an exhaust distribution plate (335) in the exhaust nozzle pipe (331); and
an exhaust distribution hole (336) extending through the exhaust distribution plate (335) and through which the drying gas passes.

6. The electrode drying device as claimed in claim 3, wherein the upper exhaust portion (30) further comprises:
an upper exhaust connection pipe (34) configured to connect a plurality of upper exhaust discharge pipes (31);
an upper exhaust extending pipe (35) extending from the upper exhaust connection pipe (34) and configured to discharge the drying gas; and
an upper exhaust fan (36) in the upper exhaust extending pipe (35) and configured to discharge the drying gas.

7. The electrode drying device as claimed in at least one of claims 2 to 6, wherein the upper air supply portion (40) comprises:
an upper air supply pipe (41) passing through the chamber (10) to supply the drying gas into the chamber;
an upper air supply duct (42) connected to the upper air supply pipe (41) and configured to face the electrode plate (100); and
an upper air supply nozzle (43) connected to the upper air supply duct (42) and through which the drying gas is supplied into the chamber (10).

8. The electrode drying device as claimed in claim 7, wherein the upper air supply nozzle (43) comprises:
an air supply nozzle pipe (431) connected to the upper air supply duct (42) and arranged above the electrode plate (100); and
an air supply distribution portion (432) in the air supply nozzle pipe (431) and configured to induce uniform air supply.

9. The electrode drying device as claimed in at least one of the preceding claims, further comprising a lower adjustment unit (60) in the chamber (10) and configured to adjust hot air under the electrode plate (100).

10. The electrode drying device as claimed in claim 9, wherein the lower adjustment unit (60) comprises:
a lower air supply pipe (61) passing through the chamber (10) to supply the drying gas into the chamber;
a lower air supply duct (62) connected to the lower air supply pipe (61) and configured to face the electrode plate;
a lower air supply nozzle (63) connected to the lower air supply duct (62) and through which the drying gas is supplied into the chamber; and
a lower exhaust pipe (64) connected to the chamber to discharge the drying gas to an outside.

11. The electrode drying device according to claim 2, wherein the plurality of upper exhaust portions (30) is a pair of upper exhaust portions (30) configured to discharge a drying gas from the chamber; and
an upper air supply portion (40) between the upper exhaust portions (30) and configured to supply the drying gas,
wherein the drying gas from the upper air supply portion (40) is exhausted by the upper exhaust portions (30) to prevent a flow rate deviation from occurring in the chamber.

12. The electrode drying device as claimed in claim 11, wherein the upper exhaust portions (30) comprise:
a pair of upper exhaust discharge pipes (31) passing through the chamber to discharge the drying gas to an outside of the chamber;
a pair of upper exhaust ducts (32) respectively connected to the pair of upper exhaust discharge pipes (31) and configured to face the electrode plate; and
upper exhaust nozzles (33) connected to the pair of upper exhaust ducts (32) and into which the drying gas is introduced.

13. The electrode drying device as claimed in claim 12, wherein the upper exhaust nozzles (33) comprise:
first exhaust nozzles (71) arranged across the pair of upper exhaust ducts (32) and connected to each of the pair of upper exhaust ducts; and
a second exhaust nozzle (72) between the first exhaust nozzles (71) and comprising opposite end portions connected to the first exhaust nozzles (71).

14. The electrode drying device as claimed in claim 12, wherein the upper air supply portion (43) comprises:
an upper air supply pipe (431) between the upper exhaust discharge pipes (31), and passing through the chamber to supply the drying gas into the chamber;
an upper air supply duct (432) between the upper exhaust ducts (32), connected to the upper air supply pipe (431), and configured to face the electrode plate; and
upper air supply nozzles (43) between the upper exhaust nozzles (33), connected to the upper air supply duct (42), and through which the drying gas is supplied into the chamber.

15. The electrode drying device as claimed in claim 14, wherein the upper air supply nozzles (43) comprise:
a first air supply nozzle (81) arranged across the upper air supply duct (42) and connected to the upper air supply duct; and
second air supply nozzles (82) extending from opposite end portions of the first air supply nozzle (81) and located between the upper exhaust nozzles (33).
